# EUROPEAN PATENT APPLICATION

(11) **EP 1 900 288 A1**
(43) Date of publication of application: **19.03.2008**
(21) Application number: 07398013.8
(22) Date of filing: 28.08.2007
(51) Int. Cl.: A23L 1/00, A23L 1/16, A23L 1/39, B65D 81/34, A23L 3/36

(54) **Process of production and packaging of pastas in general with sauce not incorporated to the pasta**

(30) Priority: 28.08.2006 BR PI0603527
(71) Applicant: Malandrino Neto, Antonio, Sao Paulo (BR)
(72) Inventor: Malandrino Neto, Antonio, Sao Paulo (BR)
(74) Representative: Pereira da Cruz, Joao

(57) **Abstract**

Process of production and packaging of pastas in general with sauce not incorporated to the pasta, especially of a production process in that the pasta (1) and the sauce (2), basic components of plates as lasagna, cannelloni, among others, is prepared in stratified sheets through freezing, of a way that the sauce (2), for being in solid state, it is not mixed with the pasta (1), equally frozen, not interfering in the taste of the pasta and vice-versa, being said stratified sheets conditioned to vacuous in wraps (3) made of impermeable, colorless plastic, resistant to the water in ebullition point. Although the food can be warm in microwave oven or conventional oven, since under water in ebullition point, it is preferable the heating in water in ebullition point obtained in the burner of the stove or similar.

## Description

The present invention refers to a new process of production and packaging of pastas with sauce not incorporated to the pasta process of production of pastas in general accompanied of the most several types of sauces, with the purpose of reproducing industrially the taste and texture characteristic of a home-made plate, but in an industrialized way. The process of production and packaging in subject are applied to the provision industry and stands out for freezing pasta and sauce separately, not allowing the interaction of both before the effective preparation, for that they are wrapped to vacuous in order to guarantee certain validity period, being the use destined to the final consumer, that should only to put the packing in water in ebullition point for consumption.

In the current days it is practically impossible for most of the population to prepare a plate daily to be served in the lunch or dinner. With the coming of the woman in the job market and with the domestic maid job more and more scarce and onerous, there was a natural tendency to the consumption of pre-prepared foods denominated usually of frozen food.

Technically, the freezing is very simple, because it is based on the conservation of the certain types of foods in cold temperatures (between -18°C and -23°C). The freezing besides keeping the physiochemical characteristics of the foods also reduces the proliferation of bacteria responsible for the deterioration of foods. As such bacteria are aerobics, in other words, they need the oxygen for multiply, the packing to vacuum contributes a lot in the control of its proliferation.

One of the foods more used in the frozen form, among so many other, are the pastas, such as lasagna, cannelloni, rondelle, etc., and in the current State of the Art, they are conditioned in plastic-coated cardboard or isopor packings. The preparation way is made so that the sauce and the pasta are intermixed. The conventional products are habitually thawed in the own packing in that they are marketed, for that using microwave oven or conventional oven to gas or electric.

Such conventional products, currently available in the market, as above said, habitually use conventional oven or microwaves for accomplishment of the thawing and heating for the consumption. In both cases the cost is loud, for needing about 40-50 minutes for heating in conventional oven or for using electric power in the case of microwave or electric oven. In the microwave oven the heating of the food is faster than in the conventional oven, and such speed contemplates in the taste of the referred food, besides presenting a drying of the pasta, due to the contact with the ambient temperature.

However, the largest inconvenience of the conventional pastas is related to the taste of the same, committed due to the preparation way. That because the existent products are frozen with the pasta intermixed with the sauce what keeping an interaction between both for certain time before and during the freezing, which changes the taste substantially, when it is heating.

With the intention of solving such inconveniences, the present process was developed, in that the pasta and the sauce are prepared to form stratified sheets, in that the components are not interacted before the preparation, for that they are wrapped to vacuous in impermeable plastic involucres. Being like this, to consume the said pasta is enough to put the wrap in boiling water. Like this, with the heating it happens a slow mixture between pasta and sauce, keeping the taste, because the mixture between both happens in few minutes before the consumption, not having the sensation that the product (pasta and sauce) was prepared with days of antecedence as it is common in the conventional products.

After the obtaining of the pasta according to the specific process supra mentioned, for the prepare by the final consumer, it should keep the product frozen until the moment in that the water is in ebullition point, in volume of water enough to the wrap stays immersed, should be in that condition for about ten minutes not having need to cover the pot. When the requested time is passed, it is only necessary to open the wrap for retreat of the product, putting the pasta mixed with the sauce in a plate, could be added other seasonings of preference.

The pasta produced with this new process, after the heating in boiling water, presents the same taste characteristics of home-made pasta, which it is translated in the texture, growth and flavor typical after heating.

The main advantages of the invention can be listed as:
**•** Flavor fidelity just like a home-made pasta;
**•** Simple and fast prepare;
**•** Preparation facility, not having need of more sophisticated equipments, as microwave oven.

The process will be understood better through the illustrations below, to a illustrative title and not limited:

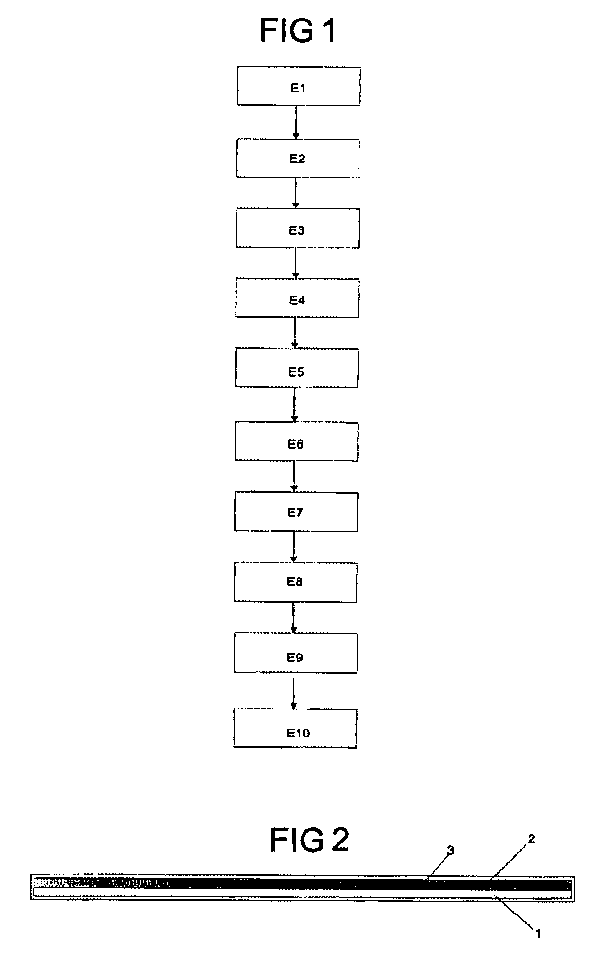

Figure 1: Flowchart of the production process and packaging;
Figure 2: View in cut of the wrapped product;

The process of production and packaging of pastas with sauce not incorporated to the pasta refers to an invention patent in that the pasta (1) and the sauce (2), basic components of plates as lasagna, cannelloni among others, is prepared in stratified sheets through freezing, of a way that the sauce (2), for being in solid state, it is not mixed with the pasta (1), equally frozen, not interfering in the taste of the pasta and vice-versa, being said stratified sheets conditioned to vacuous in wraps (3) made of impermeable, colorless plastic, resistant to the water in ebullition point. Although the food can be warm in microwave oven or conventional oven, since under water in ebullition point, it is preferable the heating in water in ebullition point obtained in the burner of the stove or similar.

More particularly the process is summarized according to the described stages. In a first stage (E1) the sauce (1) of any type should be cooled about 4°C, and in a second stage (E2) it should be deposited in a plastic tray with cover (not demonstrated) for then in a third stage (E3) to be taken to the freezing to -18°C. After the freezing the sauce becomes a sheet of in the minimum about 3 mm of thickness; in a fourth stage (E4) the pre-cooked pasta should be cooled to 4°C anointed with vegetable oil; in a fifth stage (E5) the cooled pasta is previously put in the tray containing the sauce sheet frozen; in a sixth stage (E6) after the intermixing of the frozen sauce and pasta, keeping the temperature around -18°C; in a seventh stage (E7), the product should be removed from the tray that served as mold, being the sauce and pasta adhered however not mixed. In an eighth stage (E8) frozen sauce and pasta should be conditioned in a plastic colorless wrap (3), resistant to the boiling water. In a ninth stage (E9) the product should be sealed to vacuum, using appropriate equipment for that; for then in a tenth stage (E10) to be properly identified.

The stockpiling should be accomplished to the temperature of -18°C.

For the effective prepare by the final consumer, the product should be kept frozen until the moment that the water is in ebullition point, in volume of water enough to the wrap (3) stays immersed, should be in that condition for about ten minutes not having need to cover the pot. When the requested time is passed, it is only necessary to open the wrap (3) for retreat of the product, for retreat of the product, putting the pasta (1) mixed with the sauce (2) in a plate, could be added other seasonings of preference.

## Claims

1. Process of production and packaging of pastas in general with sauce not incorporated to the pasta, **characterized** for in a first stage (E1) the sauce (1) of any type should be cooled about 4°C, and in a second stage (E2) it should be deposited in a plastic tray with cover (not demonstrated) for then in a third stage (E3) to be taken to the freezing to -18°C. After the freezing the sauce becomes a sheet of in the minimum about 3 mm of thickness; in a fourth stage (E4) the pre-cooked pasta should be cooled to 4 °C anointed with vegetable oil; in a fifth stage (E5) the cooled pasta is previously put in the tray containing the sauce sheet frozen; in a sixth stage (E6) after the intermixing of the frozen sauce and pasta, keeping the temperature around -18°C; in a seventh stage (E7), the product should be removed from the tray that served as mold, being the sauce and pasta adhered however not mixed. In an eighth stage (E8) frozen sauce and pasta should be conditioned in a plastic colorless wrap (3), resistant to the boiling water. In a ninth stage (E9) the product should be sealed to vacuum, using appropriate equipment for that; for then in a tenth stage (E10) to be properly identified.
